(19) Europäisches Patentamt
European Patent Office
Office européen des brevets

(11) **EP 2 910 598 B1**

(12) **EUROPEAN PATENT SPECIFICATION**

(45) Date of publication and mention
of the grant of the patent:
**10.03.2021 Bulletin 2021/10**

(51) Int Cl.:
*C08J 9/12* *(2006.01)*     *B29C 45/00* *(2006.01)*
*B29C 49/06* *(2006.01)*     *B29K 105/04* *(2006.01)*

(21) Application number: **13849236.8**

(22) Date of filing: **18.10.2013**

(86) International application number:
**PCT/JP2013/078286**

(87) International publication number:
**WO 2014/065205 (01.05.2014 Gazette 2014/18)**

(54) **OLEFIN RESIN FOAM STRETCH MOLDED BODY**

DEHNFORMKÖRPER AUS OLEFINHARZSCHAUM

CORPS MOULÉ DE MOUSSE ÉTIRÉ EN RÉSINE OLÉFINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2012 JP 2012232739
21.01.2013 JP 2013008668**

(43) Date of publication of application:
**26.08.2015 Bulletin 2015/35**

(73) Proprietor: **Toyo Seikan Group Holdings, Ltd.
Shinagawa-ku,
Tokyo 1418627 (JP)**

(72) Inventors:
• **AKUZAWA, Norio**
**Yokohama-shi**
**Kanagawa 240-0062 (JP)**
• **ICHIKAWA, Kentarou**
**Yokohama-shi**
**Kanagawa 240-0062 (JP)**
• **KOISO, Nobuhisa**
**Yokohama-shi**
**Kanagawa 240-0062 (JP)**
• **IINO, Hiroki**
**Yokohama-shi**
**Kanagawa 240-0062 (JP)**

(74) Representative: **J A Kemp LLP
14 South Square
Gray's Inn
London WC1R 5JJ (GB)**

(56) References cited:
**EP-A1- 2 258 624     WO-A1-2013/047262
JP-A- 2007 084 696     JP-A- 2009 084 376
JP-A- 2009 262 550**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field:

This invention relates to a foamed stretch-formed body made from a polyolefin resin.

Background Art:

Foamed plastic bodies available at present are light in weight, have excellent heat-insulating property as well as improved mechanical properties such as rigidity, and have, therefore, been used in a variety of applications. In recent years, in particular, fine cells have now been formed in the formed body relying on the physical foaming (based on the so-called microcellular technology) using an inert gas as the foaming agent. Therefore, use of the formed bodies is now expanding up to the field of, for example, packing containers (see patent document 1). That is, with the so-called chemical foaming using the sodium carbonate or the azo compound as the foaming agent and attaining the foaming by utilizing the carbon dioxide gas or the nitrogen gas that is formed by the thermal decomposition of the foaming agent, the cells tend to become coarse and, as a result, the gas-barrier property decreases, appearance becomes poor and, besides, the strength decreases conspicuously due to the foaming. Therefore, the chemical foaming cannot be used in the field of packing containers. The physical foaming, on the other hand, makes it possible to form finely cells or to impart profile to the sizes of the cells, lending itself well for being applied to the field of packing containers, too.

As for the foamed and stretched bodies formed by the physical foaming such as containers or the bottles, the above document 1 describes that many thermoplastic resins can be used. However, what are really studied and used are polyesters such as polyethylene terephthalates. If a foamed preform is formed by using a polyolefin resin such as polypropylene as taught by the patent document 1 and is stretch-formed into a foamed and stretch-formed polyolefin resin body, then the cells become very coarse to greatly deteriorate the light-shielding capability and appearance. Namely, products that can be put to practical use are not quite obtained.

There have, so far, been proposed various polyolefin resins that can be excellently stretch-formed or blow-formed (e.g., patent documents 2 to 5). However, very little study has been conducted concerning the polyolefin resins that are suited for being physically foamed and almost no study has been conducted concerning the polyolefin resins that are to be physically foamed and stretch-formed.

For instance, a patent document 6 discloses a foamed injection-formed propylene resin body. Here, however, the foaming agents used in Examples are the so-called chemical foaming agents, and no concrete study has been conducted concerning the physical foaming that uses an inert gas such as carbon dioxide gas or nitrogen gas.

Further, a patent document 7 discloses a foamed injection-formed body based on the physical foaming using an inert gas without, however, conducting any study concerning the stretch forming.

A patent document 8 is disclosing a hollow and foamed formed body (blow-formed body) of a polypropylene that has a specific MFR and a molecular weight profile. This document describes the use of an inert gas such as nitrogen gas as the foaming agent. However, the foaming agents really used in Examples are all inorganic foaming agents (polythlene), and quite no study has been conducted in regard to the so-called physical foaming. Besides, according to the technology proposed here, in order to maintain the surface smoothness, a non-foaming thermoplastic resin is coextruded onto one surface or both surfaces of the hollow foamed body to thereby form a non-foamed layer on the surfaces. It will, therefore, be learned that if it is attempted to produce a foamed and stretch-formed polypropylene body based, specifically, on the physical foaming, then it becomes necessary to form a laminated structure by the coextrusion method in order to maintain appearance such as surface smoothness. In practice, therefore, it is not still possible to obtain a stretch-formed polypropylene body of a single-layer structure having good appearance.

JP 2009 262550 relates to a resin melted material impregnated with non-foaming gas that is injected and charged into a mold cavity retained in a high pressure while applying a hold pressure so as not to cause foaming and which is cooled and solidified.

JP 2007 084696 describes a foamed film for shrink labels, which is film that stretches a blown film with an expansion ratio of 1.3 to 5 in the longitudinal direction (vertical direction or extrusion direction) so that the draw ratio is 1.5 to 4.0, which has properties such as a thickness of 120 to 300 $\mu$m, a tensile elastic modulus of 80 to 500 MPa, a static friction coefficient of 0.3 to 0.8, a coefficient of shrinkage of 15% or more at 90°C and 30% or more at 120°C, and which is foamed and has shrinkability.

EP 2 258 624 relates to a foamed plastic container that has a container wall formed by using a plastic material and in which foamed cells are distributed, the lengths of the foamed cells in the surface direction of the container wall decreasing from the outer surface of the container toward the inner surface thereof.

Prior Art Documents:

Patent Documents:

    Patent document 1: JP-A-2008-094495;
    Patent document 2: JP-A-2009-234627;
    Patent document 3: Japanese Patent No. 3641926;
    Patent document 4: JP-A-2003-286377;
    Patent document 5: WO2008/032735;
    Patent document 6: JP-A-2001-30285;
    Patent document 7: JP-A-2012-136633;
    Patent document 8: JP-A-2009-299016

Outline of the Invention:

Problems that the Invention is to Solve:

It is, therefore, an object of the present invention to provide a foamed stretch-formed body of a polyolefin resin single-layer structure which is obtained relying on the physical foaming by using an inert gas as the foaming agent yet effectively suppressing the deterioration in the appearance or in the light-shielding capability caused by foaming.
Another object of the present invention is to provide a foamed stretch-formed body of a propylene resin single-layer structure having the shape of a container and, specifically, a bottle.

Means for Solving the Problems:

In producing the polyolefin resin stretch-formed bodies (e.g., blow-formed bodies), the present inventors have repeatedly and extensively conducted experiments concerning how to introduce the foamed structure based on the physical foaming (based on the so-called microcellular technology) by using an inert gas as the foaming agent. As a result, the inventors have discovered that upon controlling properties of the polyolefin resin, amount of the inert gas impregnated and foaming conditions, it is allowed to obtain a foamed stretch-formed body having excellent surface smoothness suppressing the cells from becoming coarse and, at the same time, to form the cells of a peculiar form which are altogether different from those of when the polyester resin is physically formed making it, therefore, possible to attain a high degree of light-shielding capability despite the expansion ratio is low, and have completed the present invention.
According to the present invention, there is provided a foamed stretch-formed polyolefin resin body which has a polyolefin resin single-layer structure that is physically foamed into an expansion ratio of 1.01 to 2.0 times, wherein the surface roughness Ra (JIS-B-0601-1994) is not more than 10 $\mu$m in the region where the cells are distributed therein, wherein the polyolefin resin has an MFR (230°C) of 1 to 80 g/10 min., and wherein the polyolefin resin satisfies the following conditions (A) and (B) : (A) a random polypropylene is contained in an amount of not less than 70% by weight; and (B) in a melting curve obtained by the DSC measurement, a maximum strength peak temperature is lower than 150°C, and a difference ($T_i$ - $T_f$) is not lower than 50°C between a melt start temperature ($T_i$) at a melt peak inclusive of a maximum strength peak and a melt end temperature ($T_f$).
In the foamed stretch-formed body of the present invention, it is desired that the cells are forming cell clusters in which the cells are connected in series in a number of not less than 10 as viewed in cross section along the direction of elongation. It is, further, desired that the foamed stretch-formed body: has an expansion ratio of not more than 1.5 times and has such a light-shielding capability that the visible light transmission rate is not more than 25%; and has the shape of a container.
Here, the cell cluster stands for an aggregate in which the cells are closely contacting to one another like a cluster of grapes, and some cells in the cell cluster have their inner spaces communicated with one another. The cell cluster in the form of the above-mentioned aggregate is different from the cells of the closed type which are all independent and are present as individual bubbles.
The present invention further provides a process for producing a foamed stretch-formed polyolefin resin body of the present invention, the process comprising the steps of:

    preparing a resin melt of a polyolefin resin impregnating an inert gas; injection forming by injection-filling the resin melt in an injection mold in a manner that there takes place no foaming while applying the hold pressure; removing the unfoamed preform that is formed from the injection mold;
permitting the inert gas to be released from the surface of the obtained unfoamed preform; heating the unfoamed preform so as to be foamed; and stretch-forming the foamed preform,
wherein as the polyolefin resin, there is used a polyolefin resin having an MFR (230°C) in a range of 1 to 80 g/10 min, and wherein as the polyolefin resin, there is used a polyolefin resin that satisfies the following conditions (A) and (B) : (A) a random polypropylene is contained in an amount of not less than 70% by weight; and (B) in a melting curve obtained by the DSC measurement, a maximum strength peak temperature is lower than 150°C, and a difference (Ti - Tf) is not lower than 50°C between a melt start temperature (Ti) at a melt peak inclusive of a maximum strength peak and a melt end temperature (Tf).

Effects of the Invention:

Despite of its single-layer structure of the specified polyolefin resin, the foamed stretch-formed body of the present invention effectively suppresses the cells from becoming coarse, suppresses the expansion ratio to be not more than 2.0 times and, preferably, no more than 1.5 times, and has excellent surface smoothness. In a region where the cells are distributed therein, for example, the surface roughness Ra is not more than 10 $\mu$m and, preferably, not more than 5 $\mu$m, featuring a very high surface smoothness.

According to the present invention, in particular, the foaming conditions are controlled in order to form cell clusters in which the cells are connected in series in a number of not less than 10 along the direction of elongation.

The cell cluster can be formed specifically by the physical foaming of the polyolefin resin but cannot be formed despite the polyester resin is physically foamed.

Besides, formation of the cell cluster is advantageous for improving the light-shielding capability at a low expansion ratio. For instance, at an expansion ratio of not more than 1.5 times, a high light-shielding capability is obtained realizing a visible light transmission rate of not more than 25%. Moreover, it is allowed to impart rigidity to the stretch-formed body such as container, and the flexural strength is improved to be not less than 1.5 times as great at an expansion ratio of not more than 1.5 times.

Here, the expansion ratio stands for a ratio (foamed volume/unfoamed volume) of a volume of when foamed and a volume of when still unfoamed in a region where the cells are distributed.

Further, the foamed stretch-formed polyolefin resin body of the present invention has a high light-shielding capability despite it is blended with no coloring pigment and, therefore, requires no treatment for separating the coloring pigment when it is recycled, offering an advantage of excellent recyclability.

Moreover, the foamed stretch-formed body can be favorably used for such applications that require a reduction in the weight, a high rigidity and a high degree of heat insulation. Specifically, the foamed stretch-formed body of the invention has such advantages as good appearance, high commercial value, and can be inexpensively produced lending itself very well suited for use as containers and, specifically, bottles.

Brief Description of the Drawings:

[Fig. 1] is a view for explaining the principle of forming the cells (bubbles) in a polyolefin resin.
[Fig. 2] is a view for explaining the principle of forming cell clusters in the polyolefin resin.
[Fig. 3] is a photograph showing, on an enlarged scale, a cross section of a stretch-formed body (Experimental Example 1) in which the cell clusters of Fig. 2 are formed.
[Fig. 4] is a diagram showing a process for producing a foamed stretch-formed body of the present invention [Fig. 5] is a view showing a bottle which is a foamed stretch-formed body of the present invention and a foamed preform for producing the bottle.
[Fig. 6] is a view showing an injection mold.
[Fig. 7] is a photograph of a cross section of a foamed region of the foamed preform for producing the foamed stretch-formed body of the present invention.
[Fig. 8] is a diagram showing melting curves of polyolefin resins used in Experimental Example 1 and Experimental Example 6 as measured by the DSC.
[Fig. 9] is a photograph of a cross section in the body portion (foamed region) of a bottle obtained in Experimental Example 5 in the direction of a maximum stretch.
[Fig. 10] is a diagram showing a relationship between the amount of the residual gas and the skin layer temperature (stretch-forming temperature) of when heated in the surface layer of the foamed preform.

Modes for Carrying Out the Invention:

<Principle of forming the cells in the polyolefin resin>

The cells (bubbles) are, usually, formed as the molten resin is liberated from the pressure as represented by the extrusion foaming in which the resin in a molten state impregnating a foaming gas is filled in a forming machine that maintains a high pressure therein, and is extruded therefrom through a die, i.e., as the resin is released into the atmospheric pressure. As described in the patent document 1, on the other hand, the present inventors have reported that minutely cells can be formed by cooling and solidifying, in its unfoamed state, a formed body impregnating a foaming gas and, thereafter, heating the resin so as to be foamed.

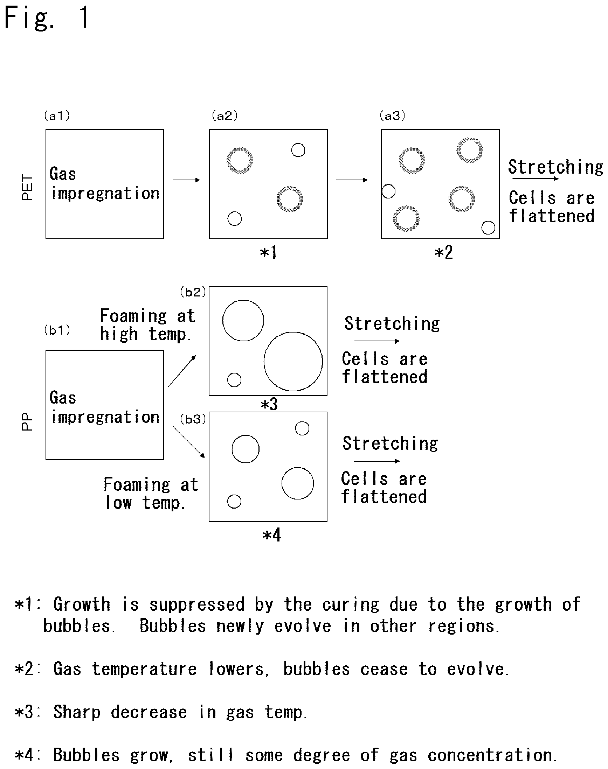

Referring to Fig. 1, the polyester as represented by a polyethylene terephthalate (PET) can be solidified in an amorphous state if it is quickly cooled from the molten state down to not higher than its glass transition temperature (Tg) . If the polyester is caused to impregnate an inert gas (Fig. 1(a1)), solidified in an amorphous state, and is heated (to be not lower than its glass transition temperature), then the impregnated gas expands to form bubbles (cells) of a spherical shape or of a shape close to sphere which continue to grow. However, if grown to a size of a certain degree, the resin (polyester) surrounding the bubbles undergoes hardening due to stress caused by the growth of bubbles whereby the growth is suppressed, bubbles are newly formed in different regions and continue to grow (Fig. 1(a2)). As the foaming continues as described above, the gas concentration decreases in the resin, formation of bubbles (i.e., foaming) ends (Fig. 1(a3), and the resin is, thereafter, stretched. As described above, the polyester suppresses the growth of bubbles and, therefore, fine bubbles (cells) are stretched in the direction of elongation to assume a flat shape. There is thus obtained a stretch-formed body of a foamed structure in which the flat and cells are distributed in an independently closed form.

On the other hand, the polyolefin resin has a very low glass transition point (Tg)(e.g., about -10°C in the case of polypropylene), has a very high crystallization rate and cannot be solidified in the amorphous state. The degree of crystallinity thereof at room temperature is about 30 to about 70% though it may vary depending on the kind of the resin. The polypropylene, too, can be physically foamed in the same manner as the polyester, i.e., by having the polypropylene impregnated with the inert gas (Fig. 1(b1)) followed by heating so that the impregnated gas expands to form bubbles.

The polyolefin resin such as polypropylene softens if it is heated at a temperature not lower than a melt start temperature (Ti) of the crystals and in which spherical bubbles grow. However, the polyolefin resin has a very higher gas diffusion velocity than the polyester resin. Besides, the polyolefin resin does not undergo stretch-hardening unlike the polyester resin. Therefore, if the polyolefin resin impregnating the gas is heated, bubbles grow greatly within short periods of time due to an increased gaseous pressure in the cells. This is because the polyolefin resin has no factor for suppressing the growth of bubbles unlike the polyester.

Therefore, if the polyolefin resin is heated at a high temperature, there grow at one time coarse bubbles of a spherical shape or of a shape close to the sphere (Fig. 1(b2)) . Besides, through the subsequent stretch forming, the coarse bubbles are stretched in the direction of elongation. Therefore, large flat cells are formed in the surface layer to spoil the appearance (homogeneity in the whiteness, smoothness) of the obtained stretch-formed body. It will, therefore, be learned that upon conducting the foaming at a low temperature, it is allowed to suppress the bubbles from becoming coarse (Fig. 1(b3)).

That is, according to the present invention, in producing the foamed stretch-formed body having a single-layer structure of a polyolefin resin instead of a laminated layer structure such as the one formed by co-extrusion, it is an essential requirement to suppress the cells (bubbles) that are foamed from becoming coarse.

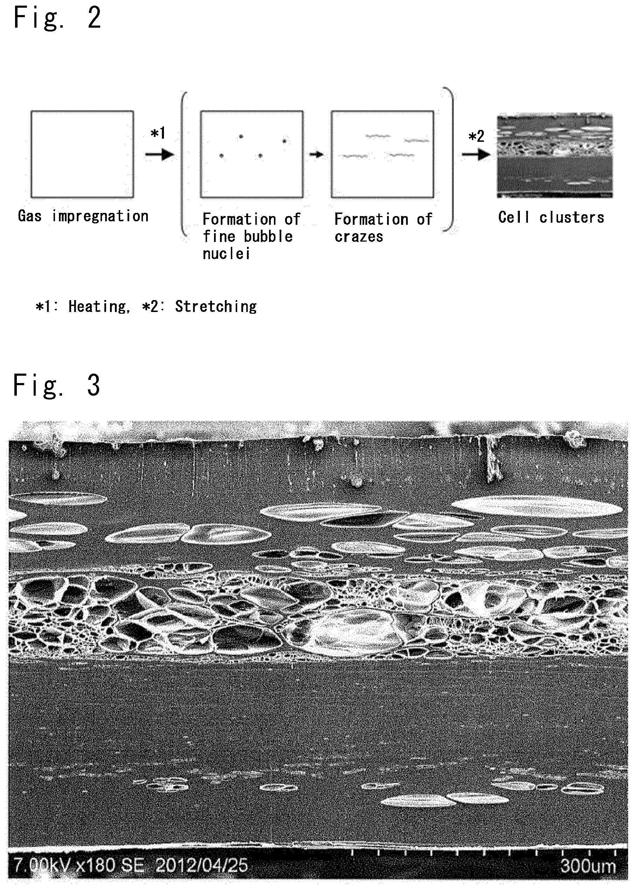

Here, referring to Fig. 2 and Experimental Example 1 described later, if the polyolefin resin impregnating the inert gas and in a cooled and solidified state is heated, saturated solubility of the inert gas decreases with a rise in the temperature, and fine bubble (cell) nuclei are formed if the inert gas becomes supersaturated. In this case, bubble nuclei are formed at a low temperature if the inert gas is impregnated in an increased amount, and bubble nuclei are formed at a high temperature if the inert gas is impregnated in a decreased amount.

Here, the polyolefin resin has been crystallized already in the step of being cooled and solidified, and is gradually softened as it is being heated. If a temperature of the resin reached crystal melting point, the crystalline structure is collapsed and the resin is softened noticeably.

If fine bubble nuclei are formed in a portion where the crystals are melted and softened, such bubbles grow into spheres pushing the surrounding resin away. When stretched, there are usually formed closed cells of a stretched and flat shape.

On the other hand, if fine bubble nuclei are formed in a region where the crystalline structure is maintained, the crystalline structure prevents the bubble nuclei from pushing the rigid resin away and from growing. Therefore, bubbles selectively grow through boundaries of crystals like cracks to form crazes. Further, through the step of stretching that is conducted after the polyolefin resin has been heated to be not lower than the crystal melting temperature, the crazes are stretched in the direction of elongation and partly grow in all directions due to the pressure of the inert gas flown into the crazes, developing an appearance in which a number of cells are densely collected. Namely, a number of cells are formed. As a result, cells come in close contact with one another like a cluster of grapes; i.e., there are formed cell clusters in which there are densely collected cells of shapes such as square poles and the like other than the spherical shape. In the cell clusters, it is observed that the neighboring cells are partly communicating with one another through the walls indicating that the cells had been linked to one another in the stage of crazes.

According to the present invention as described above, the foaming condition (foaming temperature) is set to lie in a suitable range depending on the amount of gas impregnated. For instance, the foaming is triggered in a state where the crystals are partly present in order to obtain the foamed structure in which the closed cells and the cell clusters are being formed.

For instance, if the preform impregnating the inert gas is formed by being externally heated at a suitable temperature and is stretched, then, as shown in Fig. 3, closed cells of a shape flattened in the direction of elongation are distributed on the side of the surface layer where the crystals have been completely melted when being heated and foamed, and in the core where the temperature is lower than in the surface layer and the crystalline structure is remaining, there are collectively formed cells that are stretched in the shape of a square pole as well as cell clusters that are closely arranged in many number in the direction of elongation.

Upon suitably controlling the foaming condition, therefore, it is allowed to prevent the cells from becoming coarse and, at the same time, to form the foamed structure increasing the ratio of cell clusters or chiefly forming the closed cells almost without cell clusters.

<Production of the foamed stretch-formed body>

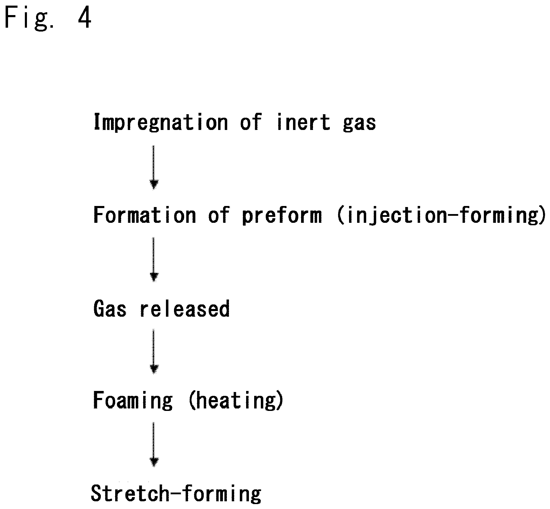

Referring to a flow chart of Fig. 4, the foamed stretch-formed body of the present invention is produced by, first, causing the polyolefin resin to impregnate an inert gas and, next, injection-forming a melt of the polyolefin resin impregnating the inert gas to obtain an unfoamed preform impregnating the inert gas which is the foaming agent, causing the gas to be released in a predetermined amount from the surface of the unfoamed preform, heating the unfoamed preform at a predetermined temperature so as to be foamed, and stretching the obtained foamed preform.

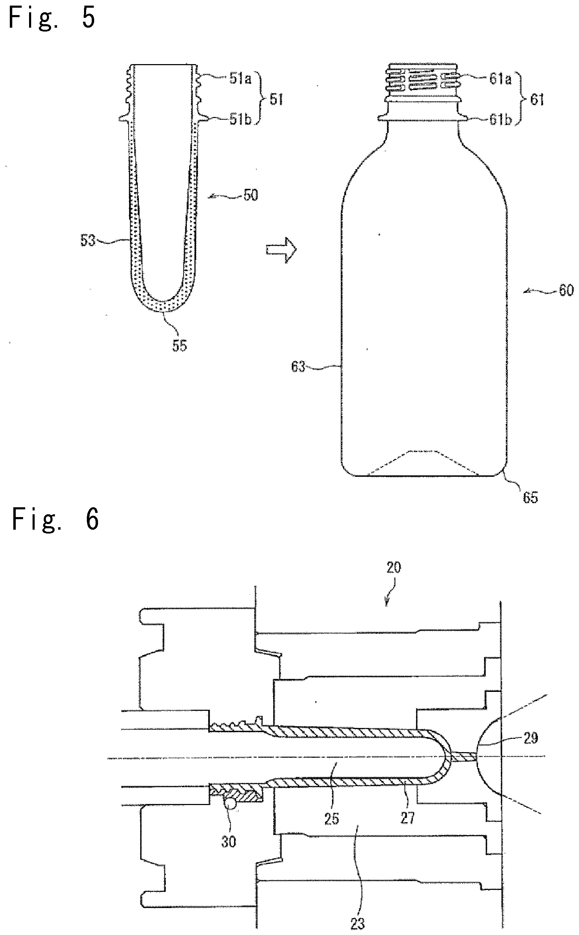

Reference is now made, for example, to a blow-formed bottle which is a stretch-formed body shown in Fig. 5. According to the present invention, a bottle 60 which is the stretch-formed body is obtained by injection-forming the polyolefin resin impregnating the inert gas, followed by foaming and release of the residual gas to prepare a foamed preform 50 for use as a container, and stretch-forming (blow-forming) the foamed preform 50.

The foamed preform 50 as a whole is of the shape of a test tube having a mouth portion 51 and a forming portion 53 (portion to be stretch-formed), the lower end of the forming portion 53 being closed and forming a bottom portion 55.

In the foamed preform 50, the mouth portion 51 is a portion that is not stretched and is forming a threaded portion 51a that screw-engages with a cap and a support ring 51b for being carried (there will be no support ring 51b depending on the type of the container that is formed). Therefore, the bottle 60 obtained by blow-forming the foamed preform 50 has a mouth portion 61 that corresponds to the mouth portion of the preform 50 and a body portion 63 that corresponds to the forming portion 53 of the preform, the end of the body portion 63 being closed to form a bottom portion 65. Further, like the mouth portion 51 of the preform 50, the mouth portion 61 has a threaded portion 61a and a support ring 61b threaded portion.

According to the present invention as will be understood from the above shape, when the bottle 60 is to be produced, foaming must be avoided in the mouth portion 51 of the preform 50 (and container 60) (mouth portion 61 of the container 60). This is because a decrease in the strength due to foaming, a decrease in the dimensional stability or a decrease in the surface smoothness, causes defective engagement with the cap or a decrease in the sealability. To avoid defective engagement with the cap or a decrease in the sealability, it is necessary to avoid foaming, specifically, in the threaded portion 51a (61a of the container 61). This holds true not only when the bottles are to be produced but also when the containers of the shape of cup are to be produced by the stretch forming.

In the above foamed preform 50, therefore, the forming portion 53 is a foamed region in which cells (bubbles) are distributed, and the mouth portion 51 is an unfoamed region in which no cell is present. Further, in the bottle 60, the body portion 63 (inclusive of the bottom portion 65) is a foamed region in which the cells are distributed being stretched in the direction of elongation or connected in series in the direction of elongation, and the mouth portion 61 is an unfoamed region in which no cell is present.

1. Polyolefin resin.

As the resin for producing containers, the present invention uses a polyolefin resin. The polyolefin resin has a very higher gas diffusion velocity than other resins such as polyester resins and, besides, cannot be hardened by stretching unlike the polyester resin. If heated, therefore, the polyolefin resin impregnating gas therein permits bubbles to greatly grow in short periods of time due to an increase in the gaseous pressure in the cells as described earlier.

As the polyolefin resin used in the present invention, there can be exemplified low-density polyethylene (LDPE), medium-density polyethylene (MDPE), high-density polyethylene (HDPE), linear low-density polyethylene (LLDPE), linear very-low-density polyethylene (LVLDPE), and high melt tension polyethylene (HMS-PE), as well as polypropylene, ethylene-propylene copolymer, polybutene-1, ethylene-butene-1 copolymer, propylene-butene-1 copolymer, ethylene-propylene-butene-1 copolymer, ethylene-vinyl acetate copolymer and ionically crosslinked olefin copolymer (ionomer), and from which a suitable polyolefin resin is selected depending on the foamed structure of the desired stretch-formed container. The above polyolefin resins may be suitably blended together as a matter of course, provided that the resin must contain a random polypropylene in an amount of not less than 70% by weight.

Here, in the present invention, it is necessary that the polyolefin resin that is used has an MFR (AST M-D-1238, 230°C) in a range of 1 to 80 g/10 min., preferably, 5 to 50 g/10 min. and, most desirably, 10 to 50 g/10 min. This is because as will be described later, in preparing a preform which is impregnating an inert gas but has not still been foamed, if the MFR lies outside the above-mentioned range, then it becomes difficult to avoid the foaming during the injection forming so will not to impair the injection formability. There, further, arouses a problem in that the stretch formability is impaired.

In the invention, further, the polyolefin resin that is used satisfies the following conditions (A) and (B):

(A) a random polypropylene is contained in an amount of not less than 70% by weight, preferably, not less than 80% by weight; and

(B) in a melting curve obtained by the DSC measurement, a maximum strength peak temperature is lower than 150°C, specifically, not higher than 145°C, and a difference (Ti - Tf) is not lower than 50°C and, specifically, not lower than 60°C between a melt start temperature (Ti) at a melt peak inclusive of a maximum strength peak and a melt end temperature (Tf).

Describing about the above condition (A), first, the random polypropylene is a random copolymer of a propylene and an $\alpha$-olefin (e.g., ethylene, butane-1, 4-methyl-1-pentene, etc.) other than the propylene, or a random copolymer of a propylene and a cyclic olefin, the amount of the copolymer such as $\alpha$-olefin contained therein being, usually, about 1 to about 8% by weight so will not to impair properties of the polypropylene. That is, use of the polyolefin resin containing much random copolymer means that among the so-called propylene resins, there is used the one having a low crystallinity.

For example, a highly crystalline polypropylene (e.g., a homopolymer of propylene or a propylene blocked copolymer) may be used. However, if a preform (cooled and solidified product) of the polypropylene impregnating gas is heated and foamed, its crystal melt peak is so sharp that the crystals are melted and softened at one time accompanying the heating and, as a result, the cells become coarse at one time.

During the stretch forming, further, the highly crystalline polypropylene is poorly formed. That is, if there is used the polypropylene having a large crystal size and a uniform crystal melt temperature, then the ratio of the amorphous resin becomes small, crazes are formed conspicuously on the crystalline grain boundaries, and breakage easily occurs from the crystalline grain boundaries.

From the standpoint of preventing the cells from becoming coarse, therefore, the random polypropylene is contained at the above-mentioned ratio. If the content of the random polypropylene is within the above range and, besides, other conditions are satisfied, then there can be used the polyolefin resin blended with other polyolefin resins, such as a homopolypropylene, a blocked copolymer of propylene and other $\alpha$-olefin or cyclic olefin, or a polyethylene.

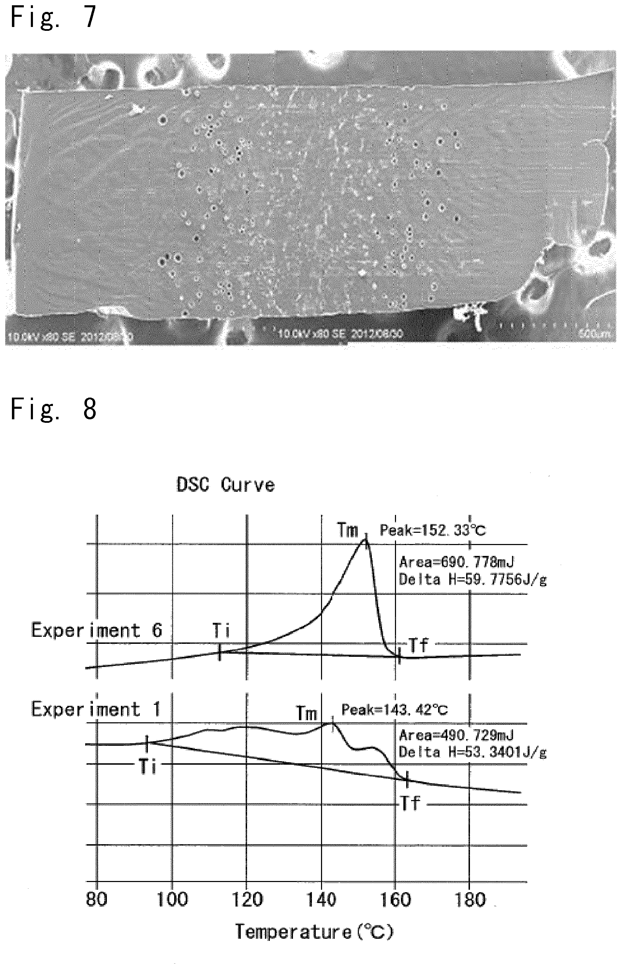

The above condition (B), i.e., the condition related to a melting curve measured by the DSC is also concerned to the amount of the above-mentioned random polypropylene, and is a condition for mildly softening the resin and for slowly growing the bubbles during the heating for foaming. For example, Fig. 8 is a diagram showing melting curves of the propylene resins used in Experimental Example 1 and Experimental Example 6 described later as measured by the DSC. Referring to Experimental Example 6, if a maximum peak temperature in the melting curve is higher than the above range or if a difference Ti - Tf) between the melt start temperature (Ti) and the melt end temperature (Tf) is smaller than the above range, then the propylene resin is softened sharply as the preform is heated for foaming and, therefore, the bubbles become sharply coarsened. After all, it is not allowed to obtain a foamed stretch-formed body (e.g., bottle) having excellent appearance. On the other hand, if the above-mentioned melting curve satisfies the condition (B) as in Experimental Example 1, then the propylene resin is gradually softened by heating. By setting the heating temperature for foaming to lie in a proper range, therefore, it is made possible to effectively prevent the bubbles from becoming sharply coarsened and to obtain a foamed stretch-formed body having excellent appearance. Upon adjusting the heating temperature for foaming, further, balance can be maintained between the cell clusters and the closed cells. The heating temperature will be described later in connection with the foaming.

By using the polyolefin resin satisfying the above conditions (A) and (B), further, the present invention is provided with such an advantage that the gas can be efficiently released in the step of releasing inert gas that will be described later. The polyolefin resin satisfying these conditions has a low crystallinity and, therefore, permits the gas to be highly diffused therein.

2. Impregnating inert gas.

In the present invention, the melt of the polyolefin resin is caused to impregnate an inert gas which is the foaming agent. Here, any inert gas can be used without limitation provided it shows no reactivity to the polyolefin resin that is used and does not adversely affect the environment. Usually, there is used a nitrogen gas or a carbon dioxide gas from the standpoint of easy availability, effect on the environment, safety, cost and the like.

The inert gas can be impregnated by using an injection-forming machine that is used in the next step of injection forming, and by feeding the inert gas maintaining a predetermined pressure to the polyolefin resin that is held in a heated and molten state in a resin-kneading portion (or a plasticizing portion) of the injection-forming machine.

According to this method, the gas can be impregnated in the injection-forming machine, i.e., the inert gas can be efficiently impregnated in the step of forming the preform that is to be stretch-formed. In this case, the temperature of the polyolefin resin melt and the gaseous pressure are so set that the gas dissolves in an amount sufficient for forming a desired number of cells (bubbles). For example, the higher the temperature, the faster the rate of impregnation though the gas dissolves in a small amount. The lower the temperature, the longer the time for the gas impregnation though the gas dissolves in an increased amount. Further, the higher the gaseous pressure, the more the amount the gas dissolves and, therefore, the larger the number of the cells.

The melt of the polyolefin resin may be blended with known additives for resins that have been used depending on the use of the stretch-formed bodies, such as coloring agent, antioxidant, antistatic agent, nucleating agent and the like so far as they do not impair melting properties of the resin.

3. Injection forming.

In the present invention, the preform which is the precursor of the stretch-formed body is formed by using the melt of the above-mentioned propylene resin impregnating the inert gas. Depending on a desired form of stretch forming, the preform may be in the shape of a test tube (when a bottle is to be produced by blow forming) or in the shape of a sheet (when a cup-like container is to be produced by plug assist forming) .

It is important to form the preform of such a shape by the injection forming; i.e., the preform of such a shape cannot be formed by the extrusion forming. Namely, the resin is formed in the molten state. The extrusion-formed body is extruded through a die and is placed in an open system where the foaming during the moment of forming cannot be prevented from taking place. As a result, very coarsely cells (bubbles) are formed making it difficult to avoid a significant decrease in the appearance of the formed body. On the other hand, the injection forming pertains to a closed system where the melt of the gas-impregnating resin is formed being injected and filled in a cavity (closed space) of the injection mold. Therefore, despite the propylene resin is placed in the molten state during the forming, the foaming can be effectively prevented from taking place upon maintaining a high pressure in the system.

In the step of injection forming, it is important that the melt of resin impregnating the inert gas is injected and filled in the cavity of the forming mold while maintaining a hold pressure. By employing the above means, the foaming is suppressed from taking place in the forming mold, and the sizes of the cells are controlled in the subsequent step of foaming.

Here, the injection and filling while maintaining the hold pressure are to continue the injection to compensate for a contraction of volume caused by the heat shrinkage and crystallization of the resin after a predetermined amount of the resin melt is injected into the cavity of the forming mold. This works to pressurize the resin melt in the forming mold and to effectively suppress the foaming from taking place.

Here, in conducting the injection forming as described above, if the polyolefin resin that is used has a low MFR, the fluidity becomes poor in the mold and it becomes difficult to suppress the foaming despite the resin melt is pressurized in the mold by utilizing the hold pressure. That is, the flow resistance of the resin is so large that the pressure loss increases, the whole resin in the forming mold cannot be effectively maintained under a pressure, and the foaming takes place. If the MFR is too high, on the other hand, the aptitude for stretching is hindered in the next step of blowing and the stretch-formed body possesses deteriorated properties . In the present invention, therefore, it will be learned that it is necessary to use a polyolefin resin having an MFR that lies in a range of 1 to 80 g/10 min., preferably, 5 to 50 g/10 min. and, most desirably, 10 to 50 g/10 min. as described already.

In conducting the injection forming according to the present invention, a high pressure (called counter pressure) is maintained in the cavity of the forming mold and in this state, the resin melt impregnating the gas is injected and filled in the cavity of the forming mold while applying the hold pressure. The resin melt then cools and solidifies in the cavity and forms a preform of a predetermined shape. That is, by utilizing the counter pressure and the hold pressure, the foaming is effectively suppressed at the time of injection forming. This method is basically the same as the method which the present applicant has proposed for the polyesters.

The resin melt filled in the cavity of the forming mold can be prevented from foaming by the application of the hold pressure. This is because the resin pressure suppresses the dissolved inert gas from expanding thereby preventing the foaming.

When the resin melt is flowing through the mold cavity, on the other hand, the foaming cannot be prevented by the hold pressure. For instance, as the gas-impregnating resin melt is filled in the mold which is maintaining the atmospheric pressure, the gas impregnated in the resin melt expands at the leading end of the resin melt that flows through the mold due to a pressure differential from the space in the mold, and the bubbles are broken. Namely, the resin melt flows through the mold with its bubbles at the leading end being broken. This state is transferred onto the surface of the mold. As the resin melt cools and solidifies on the surface of the mold, the broken bubbles are fixed on the surface of the preform that is the formed body and form so-called swirl marks. The swirl marks are reflected as roughness on the surface of the formed body that is obtained through the stretch forming that will be described later.

Here, however, occurrence of such swirl marks can be effectively prevented by injecting the gas-impregnating resin melt into the mold that maintains a pressurized state therein. This is because the pressure in the mold works to effectively suppress the breakage of bubbles while the resin melt is flowing through the mold.

Thus it is made possible to effectively suppress the foaming during the injection forming, to obtain the preform having a very smooth surface and, therefore, to obtain a stretch-formed body having good appearance.

Referring to Fig. 6 which illustrates the above injection process, an injection mold generally designated at 20 has a shell mold 23 that is maintained cool and a core mold 25, which are forming a cavity 27 that will be filled with the resin melt injected from an injection nozzle 29. The cavity 27 is communicated with a gas port 30 through a gas vent.

The cavity 27 is corresponding to the shape of a preform that is to be formed. In the diagramed embodiment, the cavity 27 is corresponding to the preform 50 for a container shown in Fig. 5.

That is, the polyolefin resin melt impregnating the inert gas is injected from the injection nozzle 29 and is filled in the cavity 27 where the resin melt is cooled and solidified; i.e., the resin melt is formed in the shape of the cavity 27. In injecting the resin melt as described above, a nitrogen gas, a carbon dioxide gas or the air is fed into the cavity 27 from the gas port 30 to maintain a high pressure in the cavity 27. Since the gas-impregnating resin melt is filled in the cavity 27 that is maintaining a high pressure therein, it is allowed to effectively suppress the breakage of bubbles at the time when the molten resin flows through the cavity 27, to prevent the occurrence of swirl marks and, therefore, to obtain a preform having a highly smooth surface. Here, the mold cavity 27 is assuming a highly smooth surface as it is formed relying on the specular working or the like working. However, the portions that do not require so much smoothness (e.g., those portions corresponding to the bottom and the like of the container), as required, may have been coarsened in advance based on, for example, the sand-blasting treatment.

As the resin melt continues to be injected and filled, the gas in the cavity 27 is discharged through the gas port 30. Even after the gas is discharged, the resin melt is continuously injected to produce a hold pressure. The hold pressure works to effectively suppress the foaming in the cavity 27.

The preform obtained by the above method is effectively suppressing the foaming owing to the hold pressure after the resin melt has been injected and filled. Therefore, despite of impregnating the gas that works as the foaming agent, the preform has a high transparency. For instance, an article having a thickness of 3 mm formed from the preform features a light transmission rate of not less than 50% for a visible ray of a wavelength of 500 nm.

In conducting the injection forming as described above, the degree of the hold pressure (hold pressure and duration thereof) is set depending on the amount of the inert gas impregnated and the temperature of the resin so that the foaming can be effectively suppressed, and is, usually, so set that the weight reduction ratio is not more than 3%. The weight reduction ratio of the preform can be found through an experiment as given by the following formula.

$$\mathtt{Weight\ reduction\ ratio\ =\ [(M_0\ -\ M_1)/M_0]\ x\ 100}$$

wherein $M_0$ is the weight of the preform without impregnating the inert gas obtained by the injection by so setting the conditions that there doesn't take place molding defective such as sink marks, and $M_1$ is the weight of the gas-impregnating preform obtained by impregnating the inert gas.

That is, the weight reduction ratio decreases with an increase in the hold pressure. The weight reduction ratio, further, decreases with an increase in the duration of the hold pressure. In the present invention, most desirably, the hold pressure condition is so set that the weight reduction ratio approaches 0%.

The pressure in the cavity 27 is not specifically limited but is, usually, maintained in a range of not less than 1.0 MPa. It is desired that the resin melt is injected and filled in the cavity 27 that maintains the pressure as described above. If the pressure is too small, breakage of bubbles cannot be effectively suppressed at the time when the resin melt flows permitting swirl marks to develop and forming surfaces of a low degree of smoothness.

4. Releasing the gas.

In the present invention, the unfoamed preform which is prepared as described above and is still impregnating the inert gas, is taken out from the cavity 27 and is permitted to foam. Prior to the foaming, here, the gas impregnated in the preform is partly released from the surface. Upon releasing the gas, there is formed a skin layer containing no cell in the surface. Besides, upon releasing the gas, there is formed such a concentration profile that the concentration of gas is high in the center of thickness of the preform and the concentration of gas is low near the surfaces. That is, in the center of thickness of the preform having the highest concentration of gas, bubble nuclei form at a low temperature triggering the formation of crazes which serve as a factor for forming cell clusters. Near the surfaces of the preform having a low concentration of gas, bubble nuclei form at a high temperature and grow into a spherical shape to form spherically cells which, when stretched as will be described later, turn into closed cells. In the surfaces where no gas is present, no bubble nucleus is formed and the skin layer remains unfoamed.

To release the gas from the preform, the preform that is taken out from the cavity 27 may be left to stand under the atmospheric pressure for a given period of time. Release of the gas, however, can be accelerated by maintaining the preform at a high temperature (not exceeding, however, the temperature at which the preform starts foaming) in an oven or the like.

5. Foaming.

After the gas is released as described above, the preform forming the skin layer free of gas is brought to the step of foaming.

In the step of foaming, the unfoamed preform is heated by using an oil bath or an infrared ray heater so as to be foamed. Further, if the preform has a hollow shape like a test tube, an iron core, for example, is inserted therein to heat and foam the preform from the inside thereof by utilizing high-frequency heating.

In the case of the container preform 50 shown in Fig. 5, the forming portion 53 is selectively heated so that the mouth portion 51 is not foamed. It is allowable, as a matter of course, to selectively heat part of the forming portion 53 to partly form the forming portion 53.

Due to the heating, the preform is foamed in the interior thereof where the inert gas is remaining. Referring to Fig. 7, there are formed fine cells of a spherical shape or a shape close to a sphere as well as crazes which serve as a factor for cell clusters in the central portion of the preform in the direction of thickness thereof.

In this case, after the preform is taken out from the cavity 27, the thickness of the skin layer of the preform can be adjusted depending on the time until it is heated and foamed and on the time for heating and foaming. That is, the longer the time until starting the heating and foaming, the larger the amount of the gas released from the surface of the preform and the larger the thickness of the skin layer of the unfoamed preform. However, the longer the time for heating and foaming, the larger the cells that are grown and, therefore, the smaller the thickness of the skin layer of the preform.

For instance, the time until the heating and foaming and the time for heating and foaming are, desirably, so adjusted that the thickness of the skin layer of the unfoamed preform is at least not less than 5 $\mu$m and, specifically, not less than 10 $\mu$m. That is, upon setting the thickness of the skin layer of the preform to lie within the above range, it is allowed to set the thickness of the unfoamed skin layer of the foamed stretch-formed body of the present invention to lie in a suitable range.

The present invention uses the polyolefin resin that permits the gas to diffuse very faster than and hardens less by stretching than, the polyester such as PET. Therefore, the bubble nuclei can grow at a considerably large rate. The heating time for foaming, therefore, needs be considerably short and is, usually, about 20 seconds to about 2 minutes depending on the size (thickness) of the preform and the amount of the gas impregnated.

The heating temperature for foaming must not be higher than the melting point (maximum strength peak temperature on a DSC melting curve) of the polyolefin resin, as a matter of course. Its concrete temperature range, however, differs depending on the kind of the polyolefin resin with which the preform is formed, the amount of the inert gas impregnated in the preform (amount of gas remaining) and on the shape of foaming.

For example, to obtain a foamed structure comprising chiefly cell clusters by forming crazes much, the polyolefin resin is heated at a temperature lower than the temperature at which the crystals start melting (to form bubble nuclei in a state where the crystalline structure is maintained) and in this state, the step of stretching is conducted as will be described later. To obtain the foamed structure comprising chiefly the closed cells, on the other hand, the polyolefin resin is heated at a temperature higher than the temperature at which the crystals start melting (to form bubble nuclei in a state where the crystalline structure is destroyed) to form the spherically cells much and in this state, the step of stretching is conducted as will be described later.

In the invention, further, the closed cells and the cell clusters may be made present maintaining a suitable balance. For example, there can be utilized such a temperature profile that when the preform is heated from the exterior, the temperature is the highest on the surface side and is the lowest in the central portion in the direction of thickness.

Namely, the skin layer of the preform is heated at a temperature not lower than, but is close to, the temperature at which the crystals start melting so that, in a portion close to the skin layer, there are formed spherically cells that are factors of the closed cells and, in the core portion, there are formed crazes that are factors of the cell clusters. That is, even if the skin layer is heated at a temperature not lower than the temperature at which the crystals start melting, the temperature is lower in the core portion. Therefore, the crystals remain in the core portion and there are formed crazes which are factors of the cell clusters.

The foaming condition (heating time for foaming) is adjusted depending on the gas concentration in the preform so that the expansion ratio is desirably 1.05 to 2.0 times, specifically, 1.05 to 1.5 times and, more specifically, 1.1 to 1.3 times in the foamed region of the foamed preform that is formed as described above. Thus the expansion ratio of the foamed and stretched container that is finally obtained can be adjusted to lie in a predetermined range. That is, if the expansion ratio becomes unnecessarily large, the spherically cells or crazes grow to enter into the skin layer of the preform. This makes it difficult form the skin layer of the preform free of cells (or crazes) and deteriorates the appearance of the foamed and stretched container that is finally obtained. Further, if the gas concentration is too low, the temperature for forming bubbles increases. As a result, no craze is formed and no cell cluster is formed in the stretched container. This, further, spoils advantages due to the foaming, such as reduction of weight, heat insulation, rigidity and light-shieling property. It is, therefore, desired that the expansion ratio of the preform is set to lie within the above-mentioned range.

In the preform foamed into the above-mentioned expansion ratio, the spherically cells assume an average diameter (equivalent to the diameter of a circle) of about 5 to about 200 $\mu$m and a cell density of about $10^4$ to about $10^{10}$ cells/cm$^3$.

In the invention, further, if the polyolefin resin used for forming the preform satisfies the above-mentioned condition (B), a maximum strength peak temperature becomes low (lower than 150°C) on the melting curve, and a difference becomes large (not less than 50°C) between the melt start temperature (Ti) and the melt end temperature (Tf). Therefore, the temperature for heating and foaming and the foaming time mentioned above can be easily adjusted. For example, if the temperature for heating and foaming lies (e.g., 110°C to 140°C) between the melt start temperature (Ti) and the melt end temperature (Tf), and approaches the melt start temperature (Ti), then crazes are formed much. If the temperature for heating and foaming separates away from the melt start temperature (Ti), then the independent spherically cells are formed much.

6. Stretch forming.

In the present invention, the foamed preform that is softened by heating and is forming spherically cells or crazes, is subjected to the step of stretch forming to obtain a desired foamed and stretch-formed body (e.g., the above-mentioned bottle 60). In this case, it is desired that the preform that is foamed by heating is directly subjected to the step of stretch forming to obtain the desired foamed and stretch-formed body. That is, the stretch forming is conducted by utilizing the heat that was used for foaming, to obtain the foamed and stretch-formed body without increasing the number of the steps and offering advantage in the cost of production.

The stretch forming is conducted by heating the preform at a temperature not lower than the melt start temperature (Ti) of the polyolefin resin that is used but lower than the maximum strength peak temperature (Tm) at the melting point. If the melt start temperature (Ti) is exceeded, the resin starts to be softened and can be stretch-blow-formed. If the crystals melt and the temperature exceeds the melting peak (Tm), however, the resin becomes viscous and becomes so brittle that it is no longer suited for being stretched.

According to the present invention, if the polyolefin resin that is used satisfies the above-mentioned conditions (A) and (B), there is obtained an advantage in that the preform can be stretch-formed in the range of foaming temperatures. That is, if the melt peak width (Tf - Ti) of the polyolefin resin is small, the foaming temperature is not brought in match with the stretching temperature, and the preform must be further heated for being stretched. This causes the cells to grow excessively in the preform and, during the stretch forming, to become larger than the thickness of the skin layer where there is no spherically cell or craze, impairing the appearance of the stretch-formed body that is obtained. The above inconvenience, however, can be effectively avoided if the stretch forming is conducted in the range of foaming temperatures.

By using the polyolefin resin that satisfies the conditions (A) and (B) as described above, the preform that is heated at the foaming temperature can be simply stretch-formed offering a very great advantage from the standpoint of productivity.

In conducting the stretch forming following the heating and foaming as described above, experiments conducted by the present inventors (see Experimental Example 9 and Fig. 8) prove that there is an optimum temperature range for stretch forming depending on the degree of outgassing described above (i.e., depending on the concentration of gas remaining in the preform) . It is, therefore, desired that, usually, the stretch-forming temperature y (°C) satisfies the following formula,

$$y < -33x + 132$$

where x is the concentration of the remaining gas (% by weight),

though dependent on the degree of crystallization of the polyolefin resin that is used and on the gas diffusion coefficient. That is, if the stretch-forming temperature y is high and the above conditions are not satisfied, the stretch-formed body obtained by stretching tends to exhibit poor appearance.

According to the present invention, upon conducting the stretch forming at the above temperature, the spherically cells or crazes are stretched together with the wall of the foamed preform, the stretch-formed body cools and solidifies as its outer wall surface comes in contact with the mold, and the closed cells and cell clusters assuming a flat shape as they are stretched in the surface direction are fixed in their shapes.

The stretch forming can be conducted by a method known, such as blow forming or plug assist forming depending on the form of the desired stretch-formed body. As shown, for instance, in Fig. 3, cells of a flat shape having a long diameter in the direction of elongation are formed on the side of the surface, cell clusters consisting of 10 or more cells connected in series in the direction of elongation are formed in the central portion in the direction of thickness, and a skin layer is formed on the surface containing none of flatly cell or cell cluster.

To obtain the bottle 60 of Fig. 5, for example, the forming portion 53 of the foamed preform 50 is stretched by the blow forming by blowing the air or the like so that the stretching ratio is about 2 to about 4 times in the biaxial directions, i.e., in the axial direction (direction of height) and in the circumferential direction and, specifically, so that the thickness of the body portion 63 is about 150 to about 400 $\mu$ m, the unfoamed skin layer being formed in a thickness of about 5 to about 100 $\mu$m on the surface of the body portion 63.

The length of the cells (closed cells) of a flat shape in the direction of maximum stretch, the aspect ratio (length in the direction of maximum stretch/thickness) and the thickness of the skin layer, come to lie in suitable ranges due to the average cell diameter of the above spherically cells and the stretching ratio.

Further, it was described above that the amount of forming the cell clusters can be adjusted depending on the temperature for foaming. For example, the lower the temperature for foaming, the larger the ratio of generating the cell clusters. As the temperature for foaming becomes lower than the temperature at which the crystals start melting, the cell clusters are chiefly formed and the closed cells of a flat shape are formed in a considerably decreased amount. Conversely, as the temperature for heating and foaming becomes higher than the temperature at which the crystals start melting, the cell clusters are formed in a suppressed amount.

<Foamed stretch-formed body>

In the foamed stretch-formed body (e.g., bottle 60 of Fig. 5) obtained as described above, the expansion ratio lies in a range of about 1.01 to about 2.0 times, specifically, about 1.01 to about 1.5 times and, more specifically, about 1.05 to about 1.5 times depending on the expansion ratio of the foamed preform mentioned above. If the expansion ratio is too large, the cells become so coarse as to decrease the appearance. If the expansion ratio is too small, on the other hand, advantages due to the foaming are lost.

On the surface layer of the foamed region (body portion 63 of the bottle 60) in which there are distributed cells and cell clusters of a flat shape, there is formed a skin layer free of cells in a thickness of not less than 5 $\mu$m, specifically, 5 to 200 $\mu$m and, most desirably, 5 to 100 $\mu$m making it possible to maintain a high degree of surface smoothness. The outer surface and the inner surface thereof are forming smooth surfaces having a surface roughness Ra (JIS-B-0601-1994) of not more than 10 $\mu$m and, specifically, not more than 5 $\mu$m. Therefore, the foamed stretch-formed body of the present invention has very excellent appearance and printability.

Further, despite the expansion ratio is low, the above-mentioned foamed structure exhibits a high degree of light-shielding capability. For instance, the formed body that is a bottle has a light-shielding rate for the visible light of not more than 30%. Specifically, the foamed structure forming the cell clusters much has a light-shielding rate for the visible light of not more than 25% with the expansion ratio of not more than 1.5 times.

The foamed structure forming the cell clusters much, further, contributes to improving the rigidity. For instance, the body portion of the bottle, despite the expansion ratio is not more than 1.5 times, exhibits a flexural strength that is increased to be not less than 1.5 times as large, i.e., a flexural strength of not less than 1500 Pa.

According to the present invention, as described above, there is obtained a foamed stretch-formed polyolefin resin body of a single layer structure through the steps of impregnating the inert gas, injection forming, foaming, releasing the residual gas, and stretch forming. Despite of its single layer structure, the foamed stretch-formed polyolefin resin body effectively suppresses the cells from becoming coarse. For instance, the foamed stretch-formed body has such advantages as a suitable degree of expansion ratio, a high degree of surface smoothness, effectively preventing a decrease in the appearance caused by foaming, and attaining a reduction in weight, heat insulation, light-shielding capability and improved rigidity due to the foaming.

The foamed stretch-formed body of the present invention effectively prevents a decrease in the appearance caused by foaming, exhibits, for example, excellent surface smoothness and improved printability, and is very useful in the field of containers and, specifically, bottles.

EXAMPLES

Excellent effects of the invention will now be described by way of Experimental Examples.

In the following experiments, measurements were taken by the methods described below.

DSC measurement:

By using the Diamond DSC manufactured by Perkin Elmer Co. as a measuring apparatus, resin pellets were measured under the condition of elevating the temperature at a rate of 10°C/min.

Surface roughness:

By using the Surfcom 2000SD3 (manufactured by Tokyo Seimitsu Co.) as a roughness measuring instrument, measurements were taken in compliance with the JIS B-0601-1994.

Rigidity of bottles:

The rigidity was evaluated as the compression strength ratio.

The compression strength ratio is a ratio of the compression strength of the foamed bottle to the compression strength of the unfoamed bottle of the same weight and same shape.

By using a universal testing machine, the body portion of the bottle was compressed at the center of the cylindrical portion and when it was depressed by 1 mm, the weight was measured to calculate the rigidity.

<Experimental Example 1>

As the polyolefin resin, there was prepared a random polypropylene J246M (manufactured by Prime Polymer Co., MFR = 30) .

The above random polypropylene (MFR = 30) was fed into an injection-forming machine, and a nitrogen gas was fed thereto through half the way of a heating cylinder in an amount of 0.40% by weight so as to be kneaded with the random polypropylene and dissolved therein.

The resin melt was injected into a mold in which the pressure has been elevated to 5 MPa by using a counter-pressure apparatus, and a hold pressure therein was so adjusted (hold pressure of 60 MPa, duration of injection hold pressure of 19 seconds) that no foaming took place, followed by cooling and solidification.

As a result, there was obtained a container preform of the shape of a test tube weighing 12.3 g, impregnating gas but assuming the substantially unfoamed state.

The obtained preform had a weight reduction ratio of 0% as compared to the case of when no foaming gas was added.

The DSC curve of the random polypropylene that was used was as shown in Fig. 8. The melt start temperature, the maximum strength peak temperature and the melt end temperature were measured to be 94°C, 140°C and 163°C, respectively, and the melt peak width (Tf - Ti) was 61°C.

The obtained preform was stored at 20°C for 6 hours. The preform was measured for its weight before and after the storage, and the nitrogen gas remaining in the preform was calculated to be 0.22% by weight.

By using an infrared ray heater, the preform was foamed by being heated in an adjusted manner over its body portion except the mouth portion so that the temperature was 115°C on the surface of the preform body portion, and was readily blow-formed. As a result, there was obtained a foamed bottle of a cylindrical shape having a capacity of about 400 ml, a height of 195 mm (cylindrical portion 135 mm) and a maximum diameter (cylindrical portion) of 60 mm.

The obtained bottle was assuming the unfoamed state at the mouth portion thereof and contained bubbles dispersed over the whole body portion thereof. The bottle possessed a smooth surface, the surface roughness (Ra) being 1.7 μm and the expansion ratio being 1.25 times in the body portion of the bottle.

Fig. 3 shows the results of when the cross section of the bottle body portion was observed by using the SEM. In the cross section of the bottle body portion, there were formed cell clusters collecting the cells of square pole-like shapes traversing in the circumferential direction. It was learned that the closed cells of a flat shape were also formed on the side of the surface layer together with the cell clusters. Estimating from the picture, not less than 100 cells were connected in series in the cell cluster along the direction of elongation, the thickness of the skin layer on the outer surface side was 70 μm, and the total amount of light transmission at a wavelength of 500 nm was 14%. The compression strength ratio was 2.0, i.e., a good strength was attained.

<Experimental Example 2>

A bottle was formed in the same manner as in Experimental Example 1 but feeding the nitrogen gas in an amount of 0.50% by weight through the heating cylinder of the injection-forming machine.

The nitrogen gas remained in an amount of 0.28% by weight in the preform of before being blow-formed, and the surface of the preform body portion had been heated by the infrared ray heater at a temperature of 117°C.

The obtained bottle was assuming the unfoamed state at the mouth portion thereof and contained bubbles dispersed over the whole body portion thereof. The surface roughness (Ra) of the bottle was 1.9 $\mu$m and the expansion ratio in the bottle body portion was 1.29 times.

From the SEM image of the cross section of the bottle body portion, it was recognized that there were formed cell clusters collecting the cells of square pole-like shapes traversing in the circumferential direction and, at the same time, there were formed closed cells of a flat shape on the side of the surface layer. Estimating from the picture, not less than 100 cells were connected in series in the cell cluster along the direction of elongation, the thickness of the skin layer on the outer surface side was 12 $\mu$m, and the total amount of light transmission at a wavelength of 500 nm was 12%. The compression strength ratio was 2.0, i.e., a good strength was attained.

<Experimental Example 3>

A bottle was formed in the same manner as in Experimental Example 2 but storing the inj ection-formed preform for 24 hours.

The nitrogen gas remained in an amount of 0.09% by weight in the preform of before being blow-formed, and the surface of the preform body portion had been heated by the infrared ray heater at a temperature of 115°C. The obtained bottle was assuming the unfoamed state at the mouth portion thereof and contained bubbles dispersed over the whole body portion thereof. The surface roughness (Ra) of the bottle was 0.39 $\mu$m and the expansion ratio in the bottle body portion was 1.19 times.

From the SEM image of the cross section of the bottle body portion, it was recognized that the cells had been arranged nearly independently from each other, and there was observed no cell cluster consisting of 10 or more cells connected in series together. The thickness of the skin layer on the outer surface side was 75 $\mu$m, the total amount of light transmission at a wavelength of 500 nm was 30%, and the compression strength ratio was 1.2.

<Experimental Example 4>

A bottle was formed in the same manner as in Experimental Example 1 but feeding the nitrogen gas in an amount of 0.30% by weight through the heating cylinder of the injection-forming machine, and storing the preform for 4 hours.

The nitrogen gas remained in an amount of 0.19% by weight in the preform of before being blow-formed, and the surface of the preform body portion had been heated by the infrared ray heater at a temperature of 117°C.

The obtained bottle assumed the unfoamed state at the mouth portion thereof and contained bubbles dispersed over the whole body portion thereof. The surface roughness (Ra) of the bottle was 2.3 $\mu$m and the expansion ratio in the bottle body portion was 1.6 times.

From the SEM image of the cross section of the bottle body portion, it was recognized that coarse cells had been arranged nearly independently from each other, and there was observed no cell cluster consisting of 10 or more cells connected in series together. The thickness of the skin layer on the outer surface side was 80 $\mu$m, and the total amount of light transmission at a wavelength of 500 nm was 25%.

<Experimental Example 5>

A bottle was formed in the same manner as in Experimental Example 1 but feeding the nitrogen gas in an amount of 1.1% by weight through the heating cylinder of the injection-forming machine, and storing the preform for 10 hours.

The nitrogen gas remained in an amount of 0.41% by weight in the preform of before being blow-formed, and the surface of the preform body portion had been heated by the infrared ray heater at a temperature of 112°C.

The obtained bottle was assuming the unfoamed state at the mouth portion thereof and contained bubbles dispersed over the whole body portion thereof. The surface roughness (Ra) of the bottle was 0.35 $\mu$m and the expansion ratio in the bottle body portion was 1.26 times.

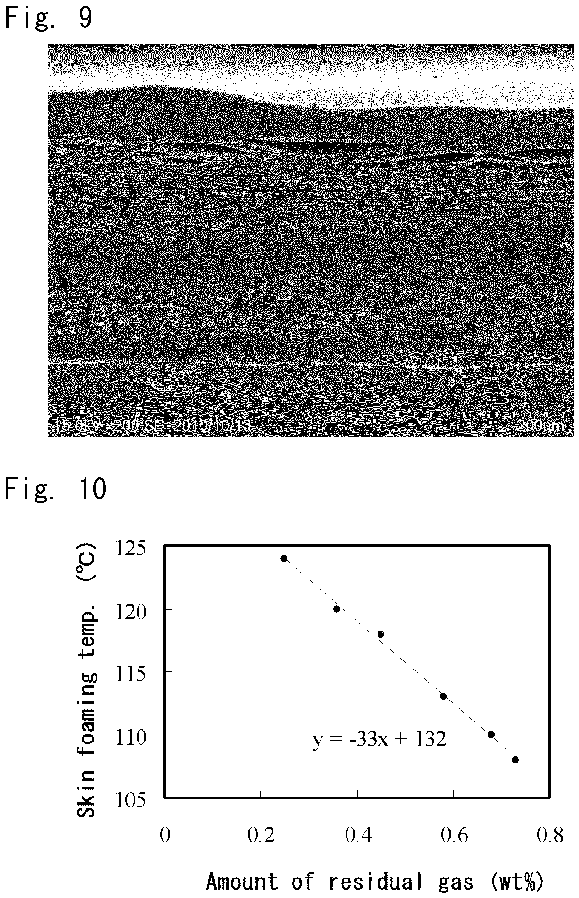

Fig. 9 is an SEM image of the cross section of the bottle body portion, and from which a number of cell clusters are observed consisting of 10 or more cells that are connected in series together.

The thickness of the skin layer on the outer surface side was 40 $\mu$m, and the total amount of light transmission at a wavelength of 500 nm was 8%.

<Experiment for forming cell clusters>

A plate 1.5 mm in thickness was obtained by feeding the random polypropylene used in Experimental Example 1 to the injection-forming machine, feeding the nitrogen gas through half the way of the heating cylinder, kneading the nitrogen gas together with the random polypropylene so as to be dissolved therein, and injecting the melt of the polypropylene into the mold in which the pressure has been elevated to 5 MPa by using the counter-pressure apparatus.

The plate was readily sandwiched by hot plates that have been heated in advance and was heated for 15 seconds to observe a temperature at which it started foaming and the shapes of the cells. Table 1 shows the results of the tests conducted by changing the amount of the nitrogen gas that was fed. As the amount of the nitrogen gas was increased, it was observed that the foaming temperature has decreased and the shape of the cells changed from spherical into craze with the temperature (94°C) at which the resin starts melting as a boundary.

[Table 1]

| Amount of nitrogen gas % by weight | Foaming temperature °C | Shape of cells |
|---|---|---|
| 0.20 | 120 | spherical |
| 0.25 | 117 | spherical |
| 0.30 | 93 | craze |
| 0.35 | 80 | craze |
| 0.40 | 72 | craze |

<Experimental Example 6> (Reference Only)

A preform was formed in the same manner as in Experimental Example 1 but changing the polyolefin resin into a polypropylene MG03B (manufactured by Nippon Polypro Co., MFR = 30).

Fig. 8 shows the DSC measurement of the polyolefin resin. The melt start temperature, the maximum strength peak temperature and the melt end temperature were 113°C, 152°C and 161°C, respectively, and the melt peak width (Tf - Ti) was 48°C.

The weight reduction ratio of the obtained preform was 0% .

The obtained preform was stored at 25°C for 6 hours and was, thereafter, heated over the body portion except the mouth portion by using the infrared ray heater and was readily blow-formed. In order to form the preform into a bottle without causing rupture, the temperature of the preform was elevated up to 128°C on the surface of the body portion thereof. However, coarse bubbles of not smaller than 1 mm were pop-formed in the skin layer, and a foamed bottle having good appearance could not be obtained. To suppress the foaming in the skin layer, the temperature was lowered down to 120°C on the surface of the preform body portion. In this case, on the other hand, the resin was not softened enough to be formed in the shape of a bottle. Therefore, a favorably foamed bottle could not be obtained despite of adjusting the heating condition.

<Experimental Example 7>

A preform was formed in the same manner as in Experimental Example 1 but changing the polyolefin resin into a polypropylene PM940M (manufactured by Sun Allomer Ltd., MFR = 30).

The melt start temperature, the maximum strength peak temperature and the melt end temperature of the polyolefin resin were measured by DSC to be 45°C, 131°C and 154°C, respectively, and the melt peak width (Tf - Ti) was 109°C.

The weight reduction ratio of the obtained preform was 0% .

The obtained preform was stored at 25°C for 4 hours and was, thereafter, heated over the body portion except the mouth portion by using the infrared ray heater so as to be foamed and was readily blow-formed to obtain a foamed bottle of a capacity of about 400 ml. The temperature for heating the preform was 113°C on the surface of the body portion thereof.

The obtained bottle assumed the unfoamed state at the mouth portion thereof and contained bubbles dispersed over the whole body portion thereof. The surface of the bottle was smooth, the surface roughness (Ra) thereof being 4.4 $\mu$m and the expansion ratio in the bottle body portion was 1.14 times.

<Experimental Example 8> (Reference Only)

A preform was formed in the same manner as in Experimental Example 1 but changing the polyolefin resin into a polyolefin J-71GR (manufactured by Prime Polymer Co., MFR = 11) and adjusting the injection hold pressure to be 70 MPa.
The melt start temperature, the maximum strength peak temperature and the melt end temperature of the polyolefin resin were measured by DSC to be 113°C, 147°C and 157°C, respectively, and the melt peak width (Tf - Ti) was 44°C.
The weight reduction ratio of the obtained preform was 0% .
The obtained preform was stored at 25°C for 6 hours and was, thereafter, heated over the body portion except the mouth portion by using the infrared ray heater so as to be foamed and was readily blow-formed to obtain a foamed bottle of a capacity of about 400 ml. The temperature for heating the preform was 122°C on the surface of the body portion thereof. The obtained bottle assumed the unfoamed state at the mouth portion thereof and contained bubbles dispersed over the whole body portion thereof.
The surface of the bottle was smooth, the surface roughness (Ra) thereof being 9.0 $\mu$m and the expansion ratio in the bottle body portion was 1.27 times.

<Experimental Example 9> (Reference Only)

By changing the polyolefin resin into a polypropylene B241 (manufactured by Prime Polymer Co., MFR = 0.5), the injection forming was conducted by feeding the nitrogen gas in an amount of 0.40% by weight through half the way of the heating cylinder in the same manner as in Example 1. The preform could not be prevented from foaming despite the hold pressure of 100 MPa was applied by injection for 22 seconds. The weight reduction ratio of the preform was 4%. The preform had been whitened over the whole body portion thereof and could not be subjected to the next step of blowing.

<Experimental Example 10>

A preform was formed in the same manner as in Experimental Example 1 but changing the polyolefin resin into a polypropylene PM20V (manufactured by Sun Allomer, Ltd., MFR = 45) and adjusting the injection hold pressure to be 70 MPa.
The melt start temperature, the maximum strength peak temperature and the melt end temperature of the polypropylene were measured by DSC to be 90°C, 146°C and 159°C, respectively, and the melt peak width (Tf - Ti) was 69°C.
The weight reduction ratio of the obtained preform was 0%.
The obtained preform was stored at 25°C for 6 hours and was, thereafter, heated over the body portion except the mouth portion by using the infrared ray heater so as to be foamed and was readily blow-formed to obtain a foamed bottle of a capacity of about 400 ml. The temperature for heating the preform was 124°C on the surface of the body portion thereof.
The obtained bottle assumed the unfoamed state at the mouth portion thereof and contained bubbles dispersed over the whole body portion thereof. The surface of the bottle was smooth, the surface roughness (Ra) thereof being 7.1 $\mu$m and the expansion ratio in the bottle body portion was 1.21 times.

<Experimental Example 11>

80 Parts by weight of a random polypropylene J246M (manufactured by Prime Polymer Co., MFR = 30) was dry-blended with 20 parts by weight of a homopolypropylene PM900A (manufactured by Sun Allomer, Ltd., MFR = 30).
A preform was formed in the same manner as in Experimental Example 1 but using the above blend of polypropylenes as the polyolefin resin.
The melt start temperature, the maximum strength peak temperature and the melt end temperature of the blend were measured by DSC to be 94°C, 141°C and 174°C, respectively. The melt peak width (Tf - Ti) was 71°C and the MFR (230°C) was 30.
The weight reduction ratio of the obtained preform was 0%.
The obtained preform was stored at 25°C for 6 hours and was, thereafter, heated over the body portion except the mouth portion by using the infrared ray heater so as to be foamed and was readily blow-formed to obtain a foamed bottle of a capacity of about 400 ml. The temperature for heating the preform was 120°C on the surface of the body portion thereof.
The obtained bottle assumed the unfoamed state at the mouth portion thereof and contained bubbles dispersed over the whole body portion thereof. The surface of the bottle was smooth, the surface roughness (Ra) thereof being 7.3 μm and the expansion ratio in the bottle body portion was 1.20 times.

<Experimental Example 12> (Reference Only)

50 Parts by weight of the random polypropylene J246M (manufactured by Prime Polymer Co., MFR = 30) was dry-blended with 50 parts by weight of the homopolypropylene PM900A (manufactured by Sun Allomer, Ltd., MFR = 30).
A preform was formed in the same manner as in Experimental Example 1 but using the above blend of polypropylenes.
The melt start temperature, the maximum strength peak temperature and the melt end temperature of the blend were measured by DSC to be 94°C, 165°C and 174°C, respectively. The melt peak width (Tf - Ti) was 71°C and the MFR (230°C) was 30.
The weight reduction ratio of the obtained preform was 0%.
The obtained preform was stored at 25°C for 6 hours and was, thereafter, heated over the body portion except the mouth portion by using the infrared ray heater so as to be foamed. It was attempted to form a foamed bottle therefrom. When the preform was heated at a temperature of up to 135°C on the surface of the body portion thereof, however, coarse bubbles of not smaller than 1 mm were pop-formed in the skin layer, and a foamed bottle having good appearance could not be obtained.
To suppress the foaming in the skin layer, further, the preform was stretched by heating it at a temperature of not higher than 135°C on the surface of the body portion thereof. However, the resin was not softened enough to be formed in the shape of a bottle. Therefore, a favorably foamed bottle could not be obtained despite of adjusting the heating condition.

<Experimental Example 13>

A preform was formed in the same manner as in Experimental Example 1 but using the random polypropylene J246M (manufactured by Prime Polymer Co., MFR = 30) and feeding the nitrogen gas in an amount of 0.80% by weight.
The weight reduction ratio of the obtained preform was 0%. The obtained preform was stored in a room maintained at 25°C, and the amount of the nitrogen gas remaining was measured by measuring the weight of the preform. Further, a relationship thereof with the surface temperature at a moment when the skin started foaming conspicuously due to the heating was examined. The results were as shown in Table 2 and in Fig. 10.
The results tell that the foamed bottles having good appearance can be obtained when they are stretched under the conditions which are on the lower side of a dotted line in Fig. 10.

[Table 2]

| Lapse of time (hrs) | Amount of residual gas (wt%) | Skin foaming temperature (°C) |
|---|---|---|
| 0 | 0.80 | |
| 3 | 0.73 | 108 |
| 5 | 0.68 | 110 |
| 10 | 0.58 | 113 |
| 18 | 0.45 | 118 |
| 24 | 0.36 | 120 |
| 36 | 0.25 | 124 |

Description of Reference Numerals:

50: container preform

60: bottle

**Claims**

**1.** A foamed stretch-formed polyolefin resin body which has a polyolefin resin single-layer structure that is physically foamed into an expansion ratio of 1.01 to 2.0 times, wherein the surface roughness Ra (JIS-B-0601-1994) is not more than 10 $\mu$m in the region where the cells are distributed therein, wherein the polyolefin resin has an MFR (AST M-D-1238, 230°C) of 1 to 80 g/10 min; and wherein the polyolefin resin satisfies the following conditions (A) and (B) :

(A) a random polypropylene is contained in an amount of not less than 70% by weight; and
(B) in a melting curve obtained by the DSC measurement, by using the Diamond DSC manufactured by Perkin Elmer Co. as a measuring apparatus and measuring pellets of the polyolefin resin under the condition of elevating the temperature at a rate of 10 °C/min, a maximum strength peak temperature is lower than 150°C, and a difference (Ti - Tf) is not lower than 50°C between a melt start temperature (Ti) at a melt peak inclusive of a maximum strength peak and a melt end temperature (Tf).

2. The foamed stretch-formed body according to claim 1, wherein the cells are forming cell clusters in which the cells are connected in series in a number of not less than 10 as viewed in cross section along the direction of elongation.

3. The foamed stretch-formed body according to claim 1, wherein the foamed stretch-formed body has an expansion ratio of not more than 1.5 times and a light-shielding capability for a visible light transmission rate of not more than 25%.

4. The foamed stretch-formed body according to claim 1, wherein the foamed stretch-formed body has the shape of a container.

5. A process for producing a foamed stretch-formed polyolefin resin body as defined in claim 1, the process comprising the steps of:

preparing a resin melt of a polyolefin resin impregnating an inert gas;
injection forming by inj ection-filling the resin melt in an injection mold in a manner that there takes place no foaming while applying the hold pressure;
removing the unfoamed preform that is formed from the injection mold;
permitting the inert gas to be released from the surface of the obtained unfoamed preform;
heating the unfoamed preform so as to be foamed; and
stretch-forming the foamed preform,
wherein as the polyolefin resin, there is used a polyolefin resin having an MFR (AST M-D-1238, 230°C) in a range of 1 to 80 g/10 min,
and wherein as the polyolefin resin, there is used a polyolefin resin that satisfies the following conditions (A) and (B):

(A) a random polypropylene is contained in an amount of not less than 70% by weight; and
(B) in a melting curve obtained by the DSC measurement, by using the Diamond DSC manufactured by Perkin Elmer Co. as a measuring apparatus and measuring pellets of the polyolefin resin under the condition of elevating the temperature at a rate of 10 °C/min, a maximum strength peak temperature is lower than 150°C, and a difference (Ti - Tf) is not lower than 50°C between a melt start temperature (Ti) at a melt peak inclusive of a maximum strength peak and a melt end temperature (Tf).

**Patentansprüche**

1. Geschäumter, dehnungsgeformter Polyolefinharzkörper, der eine einschichtige Polyolefinharzstruktur aufweist, die physikalisch in einem Expansionsverhältnis von 1,01 bis 2,0 geschäumt wird, wobei die Oberflächenrauheit Ra (JIS-B-0601-1994) in dem Bereich, in dem die Zellen darin verteilt sind, nicht mehr als 10 $\mu$m beträgt, wobei das Polyolefinharz einen MFR-Wert (AST M-D-1238, 230° C) von 1 bis 80 g/10 min aufweist; und wobei das Polyolefinharz die folgenden Bedingungen (A) und (B) erfüllt:

(A) ein beliebiges Polypropylen ist in einer Menge von nicht weniger als 70 Gew.-% enthalten; und
(B) in einer Schmelzkurve, die durch die DSC-Messung unter Verwendung des von Perkin Elmer Co. hergestellten Diamond DSC als Messgerät und Messen von Pellets des Polyolefinharzes unter der Bedingung, die Temperatur mit einer Geschwindigkeit von 10° C/min zu erhöhen, erhalten wurde, liegt eine maximale Festigkeitstemperatur unter 150° C, und eine Differenz (Ti - Tf) ist nicht niedriger als 50° C zwischen einer Schmelzstarttemperatur (Ti) bei einem Schmelzhöchstwert einschließlich eines Höchstwerts maximaler Festigkeit und einer Schmelzendtemperatur (Tf).

2. Geschäumter dehnungsgeformter Körper nach Anspruch 1, wobei die Zellen Zellcluster bilden, in denen die Zellen in einer Anzahl von nicht weniger als 10 in Reihe verbunden sind, gesehen im Querschnitt entlang der Dehnungsrichtung.

3. Geschäumter dehnungsgeformter Körper nach Anspruch 1, wobei der geschäumte dehnungsgeformte Körper ein Expansionsverhältnis von nicht mehr als dem 1,5-fachen und eine Lichtabschirmfähigkeit für eine Durchlässigkeitsrate für sichtbares Licht von nicht mehr als 25% aufweist.

4. Geschäumter dehnungsgeformter Körper nach Anspruch 1, wobei der geschäumte dehnungsgeformte Körper die Form eines Behälters hat.

5. Verfahren zur Herstellung eines geschäumten dehnungsgeformten Polyolefinharzkörpers nach Anspruch 1, wobei das Verfahren folgende Schritte umfasst:

Herstellen einer Harzschmelze eines Polyolefinharzes, das ein Inertgas imprägniert;
Spritzgießen durch Einspritzen der Harzschmelze in eine Spritzgussform, so dass beim Aufbringen des Haltedrucks kein Schäumen stattfindet;
Entfernen des ungeschäumten Vorformlings, der aus der Spritzgussform gebildet wird;
Ermöglichen, dass das Inertgas von der Oberfläche des erhaltenen ungeschäumten Vorformlings freigesetzt wird;
Erhitzen des ungeschäumten Vorformlings, um geschäumt zu werden; und
Dehnungsformen des geschäumten Vorformlings,
wobei als Polyolefinharz ein Polyolefinharz mit einem MFR-Wert (AST M-D-1238, 230° C) in einem Bereich von 1 bis 80 g/10 min verwendet wird;
und wobei als Polyolefinharz ein Polyolefinharz verwendet wird, das die folgenden Bedingungen (A) und (B) erfüllt:

(A) ein beliebiges Polypropylen ist in einer Menge von nicht weniger als 70 Gew.-% enthalten; und
(B) in einer Schmelzkurve, die durch die DSC-Messung unter Verwendung des von Perkin Elmer Co. hergestellten Diamond DSC als Messgerät und Messen von Pellets des Polyolefinharzes unter der Bedingung, die Temperatur mit einer Geschwindigkeit von 10° C/min zu erhöhen, erhalten wurde, liegt eine maximale Festigkeitstemperatur unter 150° C, und eine Differenz (Ti - Tf) ist nicht niedriger als 50° C zwischen einer Schmelzstarttemperatur (Ti) bei einem Schmelzhöchstwert einschließlich eines Höchstwerts maximaler Festigkeit und einer Schmelzendtemperatur (Tf).

**Revendications**

1. Corps en résine de polyoléfine formé par étirage expansé qui a une structure monocouche en résine de polyoléfine qui est expansée physiquement selon un rapport d'expansion de 1,01 à 2,0 fois, dans lequel la rugosité de surface Ra (JIS-B-0601-1994) n'est pas supérieures à 10 $\mu$m dans la région où les alvéoles sont réparties dans celle-ci, dans lequel la résine de polyoléfine a un indice de fluage (AST M-D-1238, 230 °C) de 1 à 80 g/10 min ; et dans lequel la résine de polyoléfine satisfait les conditions (A) et (B) suivantes :

(A) un polypropylène statistique est contenu dans une quantité non inférieure à 70 % en poids ; et
(B) dans une courbe de fusion obtenue par la mesure DSC, à l'aide du DSC Diamond fabriqué par Perkin Elmer Co. en tant qu'appareil de mesure et la mesure de pastilles de la résine de polyoléfine dans la condition d'une élévation de la température à une vitesse de 10 °C/min, une température de pic de résistance maximale est inférieur à 150 °C, et une différence (Ti-Tf) n'est pas inférieure à 50 °C entre une température de début de fusion (Ti) et un pic de fusion incluant un pic de résistance maximale et une température de fin de fusion (Tf).

2. Corps formé par étirage expansé selon la revendication 1, dans lequel les alvéoles sont des groupes d'alvéoles de formage dans lesquels les alvéoles sont reliées en série en un nombre non inférieur à 10, vues en coupe transversale suivant la direction d'allongement.

3. Corps formé par étirage expansé selon la revendication 1, dans lequel le corps formé par étirage expansé a un rapport d'expansion non supérieur à 1,5 fois et une capacité de blocage de lumière pour un taux de transmission de lumière visible non supérieure à 25 %.

4. Corps formé par étirage expansé selon la revendication 1, dans lequel le corps formé par étirage expansé a la forme d'un contenant.

5. Procédé de production d'un corps en résine de polyoléfine formé par étirage expansé tel que défini dans la revendication 1, le procédé comprenant les étapes consistant à :

preparer une masse fondue de résine d'une résine de polyoléfine imprégnant un gaz inerte ;
effectuer un formage par injection par remplissage par injection de la résine fondue dans un moule à injection de telle sorte qu'aucune expansion ne se produise pendant l'application de la pression de maintien ;
retirer la préforme non expansée qui est formée du moule à injection ;
permettre au gaz inerte d'être libéré de la surface de la préforme non expansée obtenue ;
chauffer la préforme non expansée de façon à l'expanser ; et
former par étirage la préforme expansée,
dans lequel en tant que résine de polyoléfine, on utiliser une résine de polyoléfine ayant un indice de fluage (AST M-D-1238, 230 °C) dans une plage de 1 à 80 g/10 min,
et dans lequel en tant que résine de polyoléfine, on utilise une résine de polyoléfine qui satisfait les conditions (A) et (B) suivantes :

(A) un polypropylène statistique est contenu dans une quantité non inférieure à 70 % en poids ; et
(B) dans une courbe de fusion obtenue par la mesure DSC, à l'aide du DSC Diamond fabriqué par Perkin Elmer Co. en tant qu'appareil de mesure et la mesure de pastilles de la résine de polyoléfine dans la condition d'une élévation de la température à une vitesse de 10 °C/min, une température de pic de résistance maximale est inférieur à 150 °C, et une différence (Ti-Tf) n'est pas inférieure à 50 °C entre une température de début de fusion (Ti) et un pic de fusion incluant un pic de résistance maximale et une température de fin de fusion (Tf).

# Fig. 1

(a1) (a2) (a3)

PET | Gas impregnation | → | *1 | → | *2

Stretching

Cells are flattened

(b1) (b2) Foaming at high temp.

PP | Gas impregnation

*3

Stretching

Cells are flattened

(b3)

Foaming at low temp.

*4

Stretching

Cells are flattened

*1: Growth is suppressed by the curing due to the growth of bubbles. Bubbles newly evolve in other regions.

*2: Gas temperature lowers, bubbles cease to evolve.

*3: Sharp decrease in gas temp.

*4: Bubbles grow, still some degree of gas concentration.

# Fig. 2

Gas impregnation → *1 → ( Formation of fine bubble nuclei → Formation of crazes ) → *2 → Cell clusters

*1: Heating, *2: Stretching

# Fig. 3

7.00kV x180 SE 2012/04/25    300um

Fig. 4

Impregnation of inert gas

↓

Formation of preform (injection-forming)

↓

Gas released

↓

Foaming (heating)

↓

Stretch-forming

Fig. 5

Fig. 6

Fig. 7

Fig. 8

DSC Curve

Fig. 9

15.0kV x200 SE  2010/10/13                                        200um

Fig. 10

y = -33x + 132

Amount of residual gas (wt%)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009262550 A
- JP 2007084696 A
- EP 2258624 A
- JP 2008094495 A
- JP 2009234627 A
- JP 3641926 B
- JP 2003286377 A
- WO 2008032735 A
- JP 2001030285 A
- JP 2012136633 A
- JP 2009299016 A